# EUROPÄISCHE PATENTSCHRIFT

(11) **EP 3 760 891 B1**
(45) Veröffentlichungstag und Bekanntmachung des Hinweises auf die Patenterteilung: **23.03.2022**
(21) Anmeldenummer: 20183739.0
(22) Anmeldetag: 02.07.2020
(51) Int. Cl.: F16D 65/12, B61H 5/00

(54) **RADBREMSSCHEIBE FÜR EIN SCHIENENRAD EINES SCHIENENFAHRZEUGS UND SCHIENENRAD**
RAIL WHEEL AND WHEEL BRAKE DISC FOR A RAIL WHEEL OF A RAILWAY VEHICLE
DISQUE DE FREIN DE ROUE POUR UNE ROUE FERROVIAIRE D'UN VÉHICULE FERROVIAIRE ET ROUE FERROVIAIRE

(30) Priorität: 05.07.2019 DE 102019118296
(43) Veröffentlichungstag der Anmeldung: 06.01.2021
(73) Patentinhaber: KNORR-BREMSE Systeme für Schienenfahrzeuge GmbH, 80809 München (DE)
(72) Erfinder: ELSTORPFF, Marc-Gregory, 80368 München (DE); HÄMMERL, Bernhard, 82216 Maisach (DE); SEIFERT, Peter, 85386 Dietersheim (DE)

(56) Entgegenhaltungen:
- EP-A1- 0 564 942
- DE-A1- 3 839 073
- DE-A1-102012 015 378
- DE-B- 1 158 095
- FR-A5- 2 101 277
- US-A1- 2015 247 541

## Beschreibung

Die vorliegende Erfindung betrifft eine Radbremsscheibe für ein Schienenrad eines Schienenfahrzeugs gemäß dem Oberbegriff des Anspruchs 1 sowie ein Schienenrad.

Eine gattungsgemäße Radbremsscheibe für ein Schienenrad ist beispielsweise aus der DE 10 2011 102 518 A1 bekannt. Derartige Radbremsscheiben werden üblicherweise an einem Radsteg eines Radkörpers eines Schienenrads durch Verschraubung befestigt.

Wichtig bei solchen Radbremsscheiben ist die Aufnahmefähigkeit von Bremsenergie, bei der die Masse der Radbremsscheibe eine entscheidende Rolle spielt für die Temperaturerhöhung während einer Bremsung. Die Temperatur der Radbremsscheibe muss dabei aus Gründen der Reibperformance sowie aus Festigkeits- und Verformungsgründen begrenzt sein.

Andererseits ist gerade bei Radbremsscheiben, die an Schienenfahrzeugen eingesetzt werden sollen, die mit Geschwindigkeiten von mehr als 120 km/h betrieben werden und die zudem häufigen Beschleunigungen und Abbremsungen ausgesetzt sind, wie es beispielsweise bei im Stadtverkehr genutzten Schienenfahrzeugen wie Straßenbahnen, S-Bahnen und dergleichen der Fall ist, die Minimierung der Masse ein wichtiges Kriterium für alle Komponenten im Drehgestell eines solchen Schienenfahrzeugs. Hinsichtlich der Energieersparnis ist dabei die Masse der Bremsscheiben insbesondere aufgrund der Energieaufnahme durch die zusätzliche Rotation der Bremsscheibe im Fahrbetrieb von besonderer Bedeutung.

Aus der DE 11 58 095 B, der FR 2 101 277 A5 und der EP 0 564 942 A1 sind Radbremsscheibe bekannt, die im Gegensatz zu der oben genannten, aus der DE 10 2011 102 518 A1 bekannten Radbremsscheibe an einer Nabe eines Schienenrades befestigt sind.

Weitere gattungsgemäße Radbremsscheiben sind aus den Druckschriften US 2015/247541 A1, DE 38 39 073 A1 und DE 10 2012 015 378 A1 bekannt.

Aufgabe der vorliegenden Erfindung ist es, eine Radbremsscheibe und ein Schienenrad hinsichtlich seiner Temperaturstandfestigkeit und Masse weiter zu optimieren.

Diese Aufgabe wird durch eine Radbremsscheibe mit den Merkmalen des Anspruchs 1 sowie durch ein Schienenrad mit den Merkmalen des Anspruchs 9 gelöst.

Die erfindungsgemäße Radbremsscheibe weist einen ringförmigen Reibgurt auf, eine Vielzahl von Kühlrippen, die auf einer einer Reibfläche des Reibgurts abgewandten Montageseite angeformt sind. Die Radbremsscheibe weist des Weiteren mehrere an der Montageseite des Reibgurts angeformte Schraubenaufnahmen zur Aufnahme einer Mutter oder eines Schraubenkopfes einer Schraube zur Befestigung der Radbremsscheibe an einem Radsteg eines Radkörpers des Schienenrades auf. Die Dicke des Reibgurts beträgt dabei weniger als ein Drittel der Maximaldicke der Radbremsscheibe.

Durch die Reduzierung der Reibgurtdicke unter die bisher üblichen Abmessungen ist bei dadurch reduzierter Masse auch im zulässigen Verschleißzustand des Reibgurts eine noch zulässige Reibtemperatur gewährleistet.

Vorteilhafte Ausführungsvarianten der Erfindung sind Gegenstand der Unteransprüche.

Gemäß einer vorteilhaften Ausführungsvariante beträgt die Dicke des Reibgurts zwischen 26% und 30% der Maximaldicke der Radbremsscheibe.

Gemäß einer weiteren Ausführungsvariante der Erfindung weist eine der Reibfläche des Reibgurts abgewandte Anlagefläche der Schraubenaufnahmen eine sich radial zum Ursprung des Reibgurts erstreckende Nut auf, die der Aufnahme eines Endstücks einer den Radsteg des Radkörpers durchtretenden Gleithülse dient, wobei in der Nut eine zentral angeordnete Bohrung vorgesehen ist, die der Durchführung eines Schraubenhalses der Schraube dient.

Zur Reduzierung der dynamischen Schraubenkräfte auf die Radbremsscheibe ist ein die Bohrung umgebender Bereich der Schraubenaufnahmen der Radbremsscheibe gemäß einer vorteilhaften Ausführungsvariante in einer Richtung axial zur Längsachse des Schraubenhalses elastisch ausgebildet.

Die Bohrungen durch die Nuten in der Anlagefläche der Schraubenaufnahmen sind dabei koaxial zu den Gleithülsen ausgebildet, die den Radsteg des Radkörpers durchtreten.

Mit einer solchermaßen ausgebildeten Radbremsscheibe ist es ermöglicht, auf im Stand der Technik eingesetzte übliche Gleitsteine, die der Zentrierung der Radbremsscheibe dienen, gänzlich zu verzichten.

Insbesondere die Materialanhäufungen zur Fixierung der Gleitsteine auf der Montageseite des Reibgurts lassen sich so gänzlich einsparen.

Ebenso führt die Ersetzung von Gleitsteinen durch Gleithülsen zu einer weiteren Massereduktion der Radbremsscheibe bzw. des Schienenrads insgesamt.

Zur Minderung eines Schirmens der Reibfläche des Reibgurtes weist die Reibfläche des Reibgurts wenigstens eine Ringnut auf.

Eine solche Ringnut unterbricht die Weiterleitung der Wärmedehnung im Bereich der Reibfläche in radialer Richtung zum Ursprung der Radbremsscheibe.

Dadurch sind deutlich größere Temperaturgradienten innerhalb der Reibgurtdicke infolge einer sehr hohen Reibleistung zulässig, ohne die zulässige thermisch bedingte Verformung des Reibgurtes zu überschreiten bzw. ohne plastifizierend und damit bleibende Verformungen des Reibgurtes zu erzeugen.

Um im Bereich einer solchen Ringnut die Dicke des Reibgurts beizubehalten, ist gemäß einer weiteren bevorzugten Ausführungsvariante auf der der Ringnut abgewandten Montageseite des Reibgurts eine ringförmige Verdickung angeformt.

Gemäß einer weiteren bevorzugten Ausführungsvariante weisen erste Kühlrippen radial äußere Dome auf, mit Anlageflächen zur Abstützung am Radsteg des Radkörpers, zwischen denen ein abgeflachter Bereich ausgebildet ist.

Durch die abgeflachten Bereiche der ersten Kühlrippen ist eine weitere Reduzierung der Masse ermöglicht, bei Beibehaltung hinreichend großer Abstützflächen zum Radsteg des Radkörpers des Schienenrades.

Der weggelassene Bereich der Kühlrippen ist aufgrund seines großen Abstands zur Reibfläche des Reibgurts wenig kühlwirksam und kann daher bei einer Bremsung nur wenig erwärmt werden.

Gemäß einer weiteren bevorzugten Ausführungsvariante sind zweite Kühlrippen als radial zu den Schraubenaufnahmen sich von der Montageseite des Reibgurts erstreckende Dome ausgebildet, mit Anlageflächen zur Abstützung am Radsteg des Radkörpers.

Das erfindungsgemäße Schienenrad eines Schienenfahrzeugs, mit einem Radkörper und wenigstens auf einer Seite eines Radstegs des Radkörpers mit Schrauben und Muttern befestigter Radbremsscheibe zeichnet sich durch eine wie oben beschriebene Radbremsscheibe aus.

Bevorzugt sind beidseitig des Radsteges solche Radbremsscheiben angeordnet.

Gemäß einer vorteilhaften Ausführungsvariante weist der Radsteg mehrere Durchgangsbohrungen auf, in denen Gleithülsen aufgenommen sind, in denen jeweils ein Schraubenhals einer jeweiligen Schraube aufgenommen ist, wobei Endstücke der Gleithülsen aus der Montagefläche des Radsteges hervorstehen, wobei die Endstücke der Gleithülsen in sich radial zur Drehachse des Schienenrades erstreckenden Nuten der Anlageflächen der Schraubenaufnahmen geführt sind.

Nachfolgend werden bevorzugte Ausführungsbeispiele anhand der beiliegenden Zeichnungen näher erläutert.

Es zeigen:
- Fig. 1: einen Teilausschnitt eines Schienenrades in einer Querschnittsansicht,
- Fig. 2: eine perspektivische Darstellung auf einer Montageseite der Radbremsscheibe gem. Fig. 1,
- Fig. 3: eine perspektivische Darstellung der Reibfläche der Radbremsscheibe gem. Fig. 1 und
- Fig. 4 und 5: perspektivische Ausschnitte der Radbremsscheibe mit Darstellung von Kühlrippen und Schraubenaufnahmen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Radbremsscheibe, des Schienenrads, des Reibgurts, der Kühlrippe, der Reibfläche, der Schraubenaufnahme und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

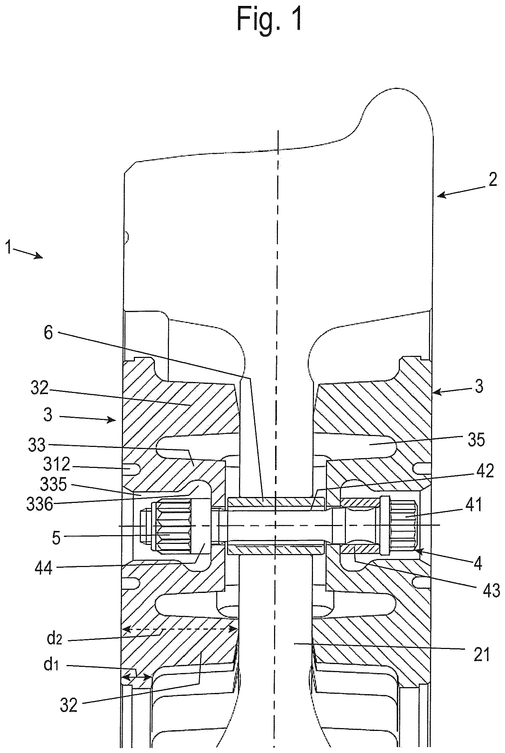

In **Fig. 1** ist mit dem Bezugszeichen 1 insgesamt eine Ausführungsvariante eines erfindungsgemäßen Schienenrads bezeichnet, von der in Fig. 1 ein Ausschnitt in einem Querschnitt dargestellt ist, indem eine Radbremsscheibe 3 an einen sich radial nach innen von der Rollfläche des Radkörpers 2 erstreckenden Radsteg 21 angeordnet ist.

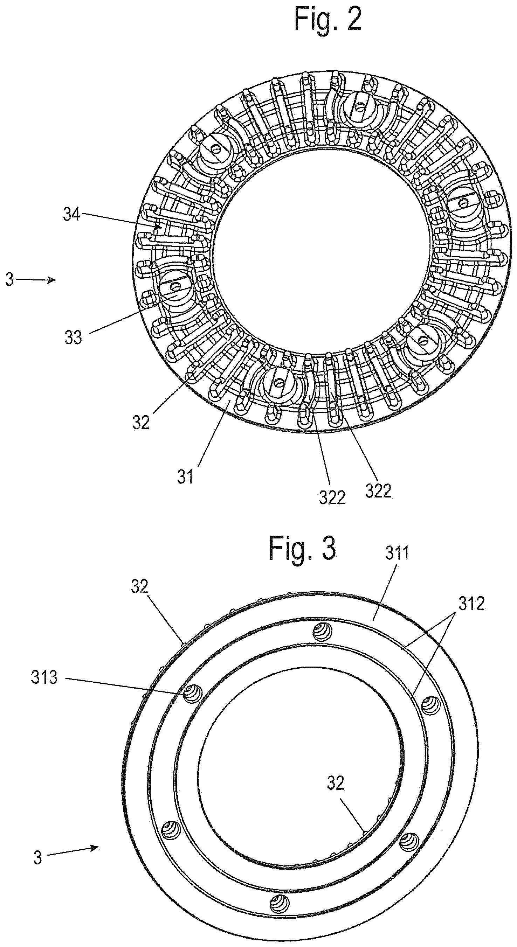

Die ringförmige Radbremsscheibe 3 weist, wie in den **Fig. 2 und 3** dargestellt ist, einen ringförmigen Reibgurt 31 auf.

Der Reibgurt 31 weist auf seiner einen Bremsbelag (nicht dargestellt) zugewandten, dem Radsteg 21 abgewandten Außenseite eine Reibfläche 311 auf.

Auf der dem Radsteg 21 zugewandten Montageseite sind eine Vielzahl von Kühlrippen 32, 36 angeformt. Des Weiteren sind an dieser Montageseite des Reibgurts 31 mehrere Schraubenaufnahmen 33 zur Aufnahme einer Mutter 5, gezeigt in Fig. 1, oder eines Schraubenkopfes 41 einer Schraube 4, gezeigt in Fig. 1 angeformt.

Die Schraube 4 dient dabei der Befestigung der Radbremsscheibe 3 an dem Radsteg 21 des Radkörpers 2 des Schienenrades 1. Die Schraube 4 ist dabei bevorzugt als Dehnschraube ausgebildet.

Die Schrauben 4 können dabei durch eine zur Reibfläche 311 offenen Ausnehmung 313 in die Schraubenaufnahme 33 eingeführt werden. Der Hohlraum dieser Schraubenaufnahmen 33 besteht dabei, wie in Fig. 1 dargestellt ist, bevorzugt aus einem der Reibfläche 311 nahen zylindrischen Bereich 335 und einem sich daran in Richtung des Radstegs 21 erstreckenden Hinterschneidung 336.

Zum Radsteg 21 hin ist dieser Hohlraum durch einen Boden mit einer zentralen Bohrung 333 begrenzt. Durch diese Bohrung 333 ist der Schraubenschaft 42 der Schraube 4 mit geringem Spiel geführt.

Auf der in Fig. 1 rechten Seite des Radstegs 21 ist im hier gezeigten Ausführungsbeispiel der Schraubenkopf 41 angeordnet, der im zylindrischen Bereich 335 der Schraubenaufnahme 33 positioniert ist. Über ein sich an den Schraubenkopf 41 anschließendes erstes Teilstück des Schraubenschaftes 42 ist eine Dehnhülse 43 übergestülpt. Die Dehnhülse 43 stützt sich einerseits an einem Kragen des Schraubenkopfes 41 ab und zum andern an dem Boden des Hohlraums der Schraubenaufnahme.

Auf der linken Seite des Radstegs 21 des in der Fig. 1 gezeigten Schienenrads 1 ist eine Mutter 5 zur Fixierung der Schraube 4 dargestellt, die sich ebenfalls an dem Boden des Hohlraums der Schraubenaufnahme 33 abstützt.

Der Boden des Hohlraums der Schraubenaufnahme 33 ist dabei bevorzugt in einer Richtung axial zur Längsachse des Schraubenhalses 42 elastisch ausgebildet, was insbesondere durch die Hinterschneidung 336 bewirkt wird.

Wie in den Fig. 2, 4 und 5 des Weiteren dargestellt ist, sind auf der Montageseite des Reibgurts 31 wie weiter oben bereits erwähnt eine Vielzahl von Kühlrippen 32, 36 angeformt. Erste Kühlrippen 32 sind dabei in einem Bereich des Reibgurts 31 zwischen benachbarten Schraubenaufnahmen 33 angeformt.

Zweite Kühlrippen 36, die in Gestalt von Domen mit bevorzugt ellipsenförmigem Querschnitt ausgebildet sind, sind radial zu den Schraubenaufnahmen 33, sich von der Montageseite des Reibgurts 31 erstreckend angeformt.

Die ersten Kühlrippen 32 weisen radial äußere Dome 321 auf, mit Anlageflächen 323 zur Abstützung am Radsteg 21 des Radkörpers 2.

Zwischen den radial äußeren Domen 321 ist ein abgeflachter Bereich 322 ausgebildet, durch den im Betrieb ebenfalls wie zwischen benachbart angeordneten ersten Kühlrippen 32 Kühlluft durch die Kühlkanäle 34 strömen kann.

Die Kühlkanäle 34 werden dabei durch die Zwischenräume zwischen benachbarten Kühlrippen 32, 36 bzw. den Schraubenaufnahmen 33 gebildet.

Die Dome 321 der ersten Kühlrippen 32 und die als Dome ausgebildeten zweiten Kühlrippen 36 weisen auf ihren dem Reibgurt 31 abgwandten Stirnflächen Anlageflächen 323, 361 zur Abstützung am Radsteg 21 des Radkörpers 2 auf.

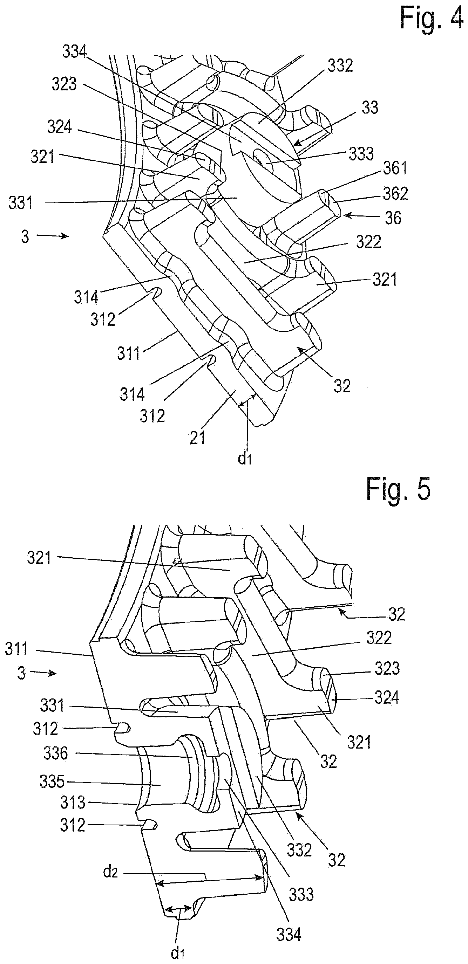

Wie in den Fig. 4 und 5 weiter zu erkennen ist, schließen sich an diese Anlageflächen 323, 361 abgeschrägte Bereiche 324, 362 radial nach außen an.

Wie in den Fig. 1 und 5 des Weiteren zu erkennen ist, beträgt die Dicke d₁ des Reibgurts 31 weniger als ein Drittel der Maximaldicke d₂ der Radbremsscheibe 3.

Die Maximaldicke d₂ der Radbremsscheibe 3 ist hier durch den Abstand zwischen der Reibfläche 311 und der Anlagefläche 323 der Kühlrippe 32 bzw. der Anlagefläche 361 der Kühlrippe 36 definiert.

Bevorzugt beträgt die Dicke d₁ des Reibgurts 31 zwischen 26% und 30% der Maximaldicke d₂ der Radbremsscheibe 3.

Die bevorzugt hülsenförmig ausgebildeten Schraubenaufnahmen 33 weisen an einer der Reibfläche 311 des Reibgurts 31 abgewandten Anlagefläche 332 der Schraubenaufnahme 33 eine sich radial zum Ursprung des Reibgurts 31 erstreckende Nut 334 zur Aufnahme eines Endstücks einer den Radsteg 21 des Radkörpers 2 durchtretenden Gleithülse 6 auf.

Der Boden dieser Nut 334 bildet dabei die Rückseite des Bodens des Hohlraums der Schraubenaufnahme 33.

Wie in den Fig. 1 und 3 bis 5 des Weiteren dargestellt ist, weist die Reibfläche 311 des Reibgurts 31 zwei Ringnuten 312 auf.

Denkbar ist auch die Anformung nur einer solchen Ringnut 312 oder auch mehr als zwei solcher Ringnuten 312.

Diese Ringnuten 312 unterbrechen dabei die Weiterleitung einer Wärmedehnung im Bereich der Reibfläche 311 in einer Richtung radial zum Ursprung der Radbremsscheibe 3.

Um im Bereich dieser Ringnuten 312 die Dicke d₁ des Reibgurts 31 nicht weiter zu vermindern, sind wie in Fig. 4 beispielhaft dargestellt, auf der der Ringnut 312 abgewandten Montageseite des Reibgurts 31 jeweilige ringförmige Verdickungen 314 angeformt.

Wie weiter in Fig. 1 gezeigt ist, weist der Radsteg 21 mehrere Durchgangsbohrungen auf, in denen Gleithülsen 6 aufgenommen sind, in denen jeweils der Schraubenhals 42 einer jeweiligen Schraube 4 aufgenommen ist.

Endstücke dieser Gleithülsen 6 stehen dabei aus den Montageflächen des Radsteges 21 hervor.

Diese Endstücke der Gleithülsen 6 sind dabei in sich radial zur Drehachse des Schienenrades 1 erstreckenden Nuten 334 der Anlageflächen 332 der Schraubenaufnahmen 33 geführt und ermöglichen sowohl eine zentrierte Vormontage der jeweiligen Radbremsscheibe 3 am Radsteg 21 des Radkörpers 2 des Schienenrads 1 als auch eine Zentrierung der Radbremsscheibe 3 am Radsteg 21 im Betrieb, wenn sich durch Wärmedehnung der Durchmesser der Radbremsscheibe 3 erhöht bzw. bei Abkühlung der Radbremsscheibe 3 sich deren Durchmesser wieder verringert.

### Bezugszeichenliste

- 1: Schienenrad

- 2: Radkörper
- 21: Radsteg

- 3: Radbremsscheibe
- 31: Reibgurt
- 311: Reibfläche
- 312: Ringnut
- 313: Ausnehmung
- 314: Verdickung
- 32: Kühlrippe
- 321: Dom
- 322: abgeflachter Bereich
- 323: Anlagefläche
- 324: abgeschrägter Bereich
- 33: Schraubenaufnahme
- 331: Mantelfläche
- 332: Anlagefläche
- 333: Bohrung
- 334: Nut
- 335: zylindrischer Bereich
- 336: Hinterschneidung
- 34: Kühlkanal
- 35: Kühlkanal
- 36: Kühlrippe
- 361: Anlagefläche
- 362: abgeschrägter Bereich

- 4: Schraube
- 41: Schraubenkopf
- 42: Schraubenschaft
- 43: Passhülse

- 5: Schraubmutter
- 6: Gleithülse
- d₁: Dicke des Reibgurts
- d₂: Dicke der Bremsscheibe

## Patentansprüche

1. Radbremsscheibe (3) für ein Schienenrad (1) eines Schienenfahrzeugs, aufweisend
- einen ringförmigen Reibgurt (31),
- eine Vielzahl von Kühlrippen (32, 36), die auf einer einer Reibfläche (311) des Reibgurts (31) abgewandten Montageseite angeformt sind,
- mehrere an der Montageseite des Reibgurts (31) angeformte Schraubenaufnahmen (33) zur Aufnahme einer Mutter (5) oder eines Schraubenkopfes (41) einer Schraube (4) zur Befestigung der Radbremsscheibe (3) an einem Radsteg (21) eines Radkörpers (2) des Schienenrades (1),
**dadurch gekennzeichnet, dass**
- die Dicke (d₁) des Reibgurts (31) weniger als ein Drittel der Maximaldicke (d₂) der Radbremsscheibe (3) beträgt.

2. Radbremsscheibe (3) nach Anspruch 1, **dadurch gekennzeichnet, dass** die Dicke (d₁) des Reibgurts (31) zwischen 26% und 30% der Maximaldicke (d₂) der Radbremsscheibe (3) beträgt.

3. Radbremsscheibe (3) nach Anspruch 1 oder 2, **dadurch gekennzeichnet, dass** eine der Reibfläche (311) des Reibgurts (31) abgewandte Anlagefläche (332) der Schraubenaufnahmen (33) eine sich radial zum Ursprung des Reibgurts (31) erstreckende Nut (334) zur Aufnahme eines Endstücks einer den Radsteg (21) des Radkörpers (2) durchtretenden Gleithülse (6) aufweist, mit einer zentral angeordneten Bohrung (333) zur Durchführung eines Schraubenhalses (42) der Schraube (4).

4. Radbremsscheibe (3) nach Anspruch 3, **dadurch gekennzeichnet, dass** ein die Bohrung (333) umgebender Bereich der Schraubenaufnahmen (33) in einer Richtung axial zur Längsachse des Schraubenhalses (42) elastisch ausgebildet ist.

5. Radbremsscheibe (3) nach einem der vorhergehenden Ansprüche, **dadurch gekennzeichnet, dass** die Reibfläche (311) des Reibgurts (31) wenigstens eine Ringnut (312) aufweist.

6. Radbremsscheibe (3) nach Anspruch 5, **dadurch gekennzeichnet, dass** zur Beibehaltung der Dicke (d₁) des Reibgurts (31) auf der der Ringnut (312) abgewandten Montageseite des Reibgurts (31) eine ringförmige Verdickung (314) angeformt ist.

7. Radbremsscheibe (3) nach einem der vorhergehenden Ansprüche, **dadurch gekennzeichnet, dass** erste Kühlrippen (32) radial äußere Dome (321) aufweisen, mit Anlageflächen (323) zur Abstützung am Radsteg (21) des Radkörpers (2), zwischen denen ein abgeflachter Bereich (322) ausgebildet ist.

8. Radbremsscheibe (3) nach einem der vorhergehenden Ansprüche, **dadurch gekennzeichnet, dass** zweite Kühlrippen (36) als radial zu den Schraubenaufnahmen (33) sich von der Montageseite des Reibgurts (31) erstreckende Dome ausgebildet sind, mit Anlageflächen (361) zur Abstützung am Radsteg (21) des Radkörpers (2).

9. Schienenrad (1) eines Schienenfahrzeugs, mit einem Radkörper (2) und wenigstens auf einer Seite eines Radstegs (21) des Radkörpers (2) mit Schrauben (4) und Muttern (5) befestigter Radbremsscheibe (3), **dadurch gekennzeichnet, dass** die Radbremsscheibe (3) gemäß einem der vorstehenden Ansprüche ausgebildet ist.

10. Schienenrad (1) nach Anspruch 9, **dadurch gekennzeichnet, dass** der Radsteg (21) mehrere Durchgangsbohrungen aufweist, in denen Gleithülsen (6) aufgenommen sind, in denen jeweils ein Schraubenhals (42) einer jeweiligen Schraube (4) aufgenommen sind, wobei Endstücke der Gleithülsen (6) aus der Montagefläche des Radsteges (21) hervorstehen, wobei die Endstücke der Gleithülsen (6) in sich radial zur Drehachse des Schienenrades (1) erstreckenden Nuten (334) der Anlageflächen (332) der Schraubenaufnahmen (33) geführt sind.

## Claims

1. Wheel brake disc (3) for a rail wheel (1) of a rail vehicle, having
- an annular friction belt (31),
- a plurality of cooling fins (32, 36) formed integrally on a mounting side - averted from a friction surface (311) - of the friction belt (31),
- several screw receptacles (33) formed integrally on the mounting side of the friction belt (31) for receiving a nut (5) or a screw head (41) of a screw (4) for securing the wheel brake disc (3) to a wheel web (21) of a wheel body (2) of the rail wheel (1),
**characterised in that**
- the thickness (d₁) of the friction belt (31) is less than a third of the maximum thickness (d₂) of the wheel brake disc (3).

2. Wheel brake disc (3) according to claim 1, **characterised in that** the thickness (d₁) of the friction belt (31) is between 26% and 30% of the maximum thickness (d₂) of the wheel brake disc (3).

3. Wheel brake disc (3) according to claim 1 or 2, **characterised in that** a contact surface - averted from the friction surface (311) of the friction belt (31) - of the screw receptacles (33) has a groove (334) extending radially with respect to the source of the friction belt (31) for receiving an end piece of a sliding sleeve (6) passing through the wheel web (21) of the wheel body (2), with a centrally located bore (333) for the passage of a screw neck (42) of the screw (4).

4. Wheel brake disc (3) according to claim 3, **characterised in that** a region - surrounding the bore (333) - of the screw receptacles (33) is designed to be elastic in a direction axial to the longitudinal axis of the screw neck (42).

5. Wheel brake disc (3) according to any of the preceding claims, **characterised in that** the friction surface (311) of the friction belt (31) has at least one annular groove (312).

6. Wheel brake disc (3) according to claim 5, **characterised in that** an annular thickening (314) is integrally formed on the mounting side - averted from the annular groove (312) - of the friction belt (31) to maintain the thickness (d₁) of the friction belt (31).

7. Wheel brake disc (3) according to any of the preceding claims, **characterised in that** first cooling fins (32) have radially outer domes (321) with contact surfaces (323) for support on the wheel web (21) of the wheel body (2), between which contact surfaces (323) a flattened region (322) is formed.

8. Wheel brake disc (3) according to any of the preceding claims, **characterised in that** second cooling fins (36) are designed as domes extending radially with respect to the screw receptacles (33) from the mounting side of the friction belt (31), with contact surfaces (361) for support on the wheel web (21) of the wheel body (2).

9. Rail wheel (1) of a rail vehicle, having a wheel body (2) and a wheel brake disc (3) secured with screws (4) and nuts (5) on at least one side of a wheel web (21) of the wheel body (2), **characterised in that** the wheel brake disc (3) is designed according to any of the preceding claims.

10. Rail wheel (1) according to claim 9, **characterised in that** the wheel web (21) has several through-holes in which sliding sleeves (6) are received, each of which accommodates a screw neck (42) of a respective screw (4), wherein end pieces of the sliding sleeves (6) project from the mounting surface of the wheel web (21), wherein the end pieces of the sliding sleeves (6) are guided in grooves (334) - extending radially with respect to the axis of rotation if the rail wheel (1) - of the contact surfaces (332) of the screw receptacles (33).

## Revendications

1. Disque (3) de frein de roue d'une roue (1) ferroviaire d'un véhicule ferroviaire, comportant
- une ceinture (31) annulaire de friction,
- une pluralité d'ailettes (32, 36) de refroidissement, qui sont formées d'un côté de montage, loin d'une surface (311) de friction de la ceinture (31) de friction,
- plusieurs logements (33) taraudés formés du côté de montage de la ceinture (31) de friction, pour la réception d'un écrou (5) ou d'une tête (41) d'une vis (4) du fixation du disque (3) de frein de roue à une entretoise (21) d'un corps (2) de la roue (1) ferroviaire,
**caractérisé en ce que**
- l'épaisseur (d₁) de la ceinture (31) de friction est plus petite qu'un tiers de l'épaisseur (d₂) maximum du disque (3) de frein de roue.

2. Disque (3) de frein de roue suivant la revendication 1, **caractérisé en ce que** l'épaisseur (d₁) de la ceinture (31) de friction représente entre 26 % et 30 % de l'épaisseur (d₂) maximum du disque (3) de frein de roue.

3. Disque (3) de frein de roue suivant la revendication 1 ou 2, **caractérisé en ce qu'**une surface (332) de contact, loin de la surface (311) de friction de la ceinture (31) de friction, des logements (33) taraudés a, pour la réception d'un embout d'une douille (6) coulissante traversant l'entretoise (21) du corps (2) de roue, un rainure (334) s'étendant radialement vers l'origine de la ceinture (31) de friction, douille (6) ayant un alésage (333) disposé centralement pour le passage d'un col (42) de la vis (4).

4. Disque (3) de frein suivant la revendication 3, **caractérisé en ce qu'**une partie, entourant l'alésage (333) des logements (33) taraudés, est constituée de manière élastique dans une direction axialement par rapport à l'axe longitudinal du col (42) de la vis.

5. Disque (3) de frein suivant l'une des revendications précédentes, **caractérisé en ce que** la surface (311) de friction de la ceinture (31) de friction a au moins une rainure (312) annulaire.

6. Disque (3) de frein suivant la revendication 5, **caractérisé en ce que**, pour conserver l'épaisseur (d₁) de la ceinture (31) de friction, un épaississement (314) annulaire est formé sur la face de montage, loin de la rainure (312) annulaire, de la ceinture (31) de friction.

7. Disque (3) de frein suivant l'une des revendications précédentes, **caractérisé en ce que** des première ailettes (32) de refroidissement ont des dômes (321) extérieurs radialement, ayant des surfaces (323) de contact pour l'appui sur l'entretoise (21) du corps (2) de la roue, entre lesquelles est formée une partie (322) aplatie.

8. Disque (3) de frein suivant l'une des revendications précédentes, **caractérisé en ce que** des deuxièmes ailettes (36) de refroidissement sont constituées sous la forme de dôme s'étendant radialement aux logements (33) taraudés, à partir de la face de montage de la ceinture (31) de fiction et ayant des surfaces (361) de contact pour l'appui de l'entretoise (21) du corps (2) de la roue.

9. Roue (1) ferroviaire d'un véhicule ferroviaire, comprenant un corps (2) de roue et au moins un disque (3) de frein de roue fixé sur une face d'une entretoise (21) du corps (2) de roue par des vis (4) et des écrous (5), **caractérisée en ce que** le disque (3) de frein de roue est constitué suivant l'une des revendications précédentes.

10. Roue (1) ferroviaire suivant la revendication 9, **caractérisée en ce que** l'entretoise (21) de roue a plusieurs trous traversants, dans lesquels sont reçues des douilles (6) coulissantes, dans lesquelles sont reçus respectivement un col (42) d'une vis (4) respective, des embouts des douilles (6) coulissantes faisant saillie de la face de montage de l'entretoise (21) de roue, les embouts des douilles (6) coulissantes étant guidés dans des rainures (334), s'étendant radialement par rapport à l'axe de rotation de la roue (1) ferroviaire, des surfaces (332) de contact des logements (33) taraudés.
